# EUROPEAN PATENT APPLICATION

(11) **EP 3 964 980 A1**
(43) Date of publication of application: **09.03.2022**
(21) Application number: 21192121.8
(22) Date of filing: 19.08.2021
(51) Int. Cl.: G06F 16/901, G06F 16/907

(54) **AUTOMATICALLY RECOMMENDING AN EXISTING MACHINE LEARNING PROJECT AS ADAPTABLE FOR USE IN A NEW MACHINE LEARNING PROJECT**

(30) Priority: 04.09.2020 US 202017013136
(71) Applicant: FUJITSU LIMITED, Kanagawa 211-8588 (JP)
(72) Inventor: Saha, Ripon K., Sunnyvale, California, 94085 (US); Prasad, Mukul R., Sunnyvale, California, 94085 (US)
(74) Representative: Hoffmann Eitle

(57) **Abstract**

According to one or more embodiments, operations may include, extracting first features from existing machine learning (ML) projects and storing the first features in a corpus. In addition, the operations may include performing a first search on the corpus based on a first search query to generate a first ranked set of the existing ML projects. Moreover, the operations may include generating second features based on the first features of the first ranked set of the existing ML projects. Moreover, the operations may include performing a second search on the corpus based on a second search query to generate a second ranked set of the existing ML projects. In addition, the operations may include recommending a highest ranked existing ML project in the second ranked set of the existing ML projects as adaptable for use in a second ML project.

## Description

### FIELD

The embodiments discussed in the present disclosure are related to automatically recommending an existing machine learning project as adaptable for use in a new machine learning project.

### BACKGROUND

Machine learning (ML) generally employs ML models that are trained with training data to make predictions that automatically become more accurate with ongoing training. ML may be used in a wide variety of applications including, but not limited to, traffic prediction, web searching, online fraud detection, medical diagnosis, speech recognition, email filtering, image recognition, virtual personal assistants, and automatic translation.

As ML has become increasingly common, there is often a scarcity of ML experts (e.g., skilled data scientists) available to implement new ML projects. For example, by some estimates, the vast majority of data scientist currently tasked with developing new ML projects are non-experts (e.g., relatively unskilled or novice), with only around 2 in 5 having a masters or doctoral degree that would qualify them for increasingly complex ML project development.

Automated ML (AutoML) is the process of automating the process of applying ML to real-world problems. AutoML may allow non-experts to make use of ML models and techniques without requiring them to first become ML experts. AutoML has been proposed as a solution to the ever-growing challenge of implementing new ML projects even though there is a scarcity of ML experts. However, current AutoML solutions offer only simplistic and partial solutions that are insufficient to enable non-experts to fully implement new ML projects.

The subject matter claimed in the present disclosure is not limited to embodiments that solve any disadvantages or that operate only in environments such as those described above. Rather, this background is only provided to illustrate one example technology area where some embodiments described in the present disclosure maybe practiced.

### SUMMARY

According to an aspect of an embodiment, operations may include, for each existing machine learning (ML) project in a set of existing ML projects, extracting first project features, first dataset features, and first pipeline features from the existing ML project, and storing the first project features, the first dataset features, and the first pipeline features for the existing ML project in a corpus. The operations may also include generating a first search query based on second project features and second dataset features from a second ML project. In addition, the operations may include performing a first search on the corpus based on the first search query to generate a first ranked set of the existing ML projects based on one or more first similarity scores. Moreover, the operations may include generating second pipeline features based on the first pipeline features of the first ranked set of the existing ML projects. In addition, the operations may include generating a second search query based on the second project features, the second dataset features, and the second pipeline features. Moreover, the operations may include performing a second search on the corpus based on the second search query to generate a second ranked set of the existing ML projects based on one or more second similarity scores. In addition, the operations may include recommending a highest ranked existing ML project in the second ranked set of the existing ML projects as adaptable for use in the second ML project.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment related to automatically searching for and adapting existing ML projects into new ML projects;
FIG. 2 illustrates a block diagram of an example computing system;
FIG. 3 is a flowchart of an example method of automatically recommending an existing ML project as adaptable for use in a new ML project;
FIG. 4 is a flowchart of an example method of performing a search on a corpus;
FIG. 5 is a flowchart of an example method of generating relevant pipeline features for a new ML project;
FIG. 6 illustrates a first example structured document of normalized ML project features;
FIG. 7 illustrates a second example structured document of normalized ML project features;
FIG. 8 illustrates an example search query for a new ML project formatted as a structured query;
FIG. 9 is a flowchart of an example method of computing a similarity score; and
FIG. 10 illustrates an example reformulated search query for a new ML project formatted as a structured query.

### DESCRIPTION OF EMBODIMENTS

Some embodiments described in the present disclosure relate to methods and systems of automatically recommending an existing ML project as adaptable for use in a new ML project.

As ML has become increasingly common, there is often a scarcity of ML experts (e.g., skilled data scientists) available to implement new ML projects. Unlike traditional programs, supervised ML pipelines of ML projects may generally have high similarities in their workflow. However, it can still be very time consuming and challenging to implement the first end-to-end ML project for a new predictive task for numerous reasons, including lack of experience and difficulties related to keeping up-to-date with constantly evolving ML frameworks and libraries. Although various AutoML solutions (e.g. Auto-Sklearn, AutoPandas, etc.) have been proposed to resolve the ever-growing challenge of implementing new ML projects with a scarcity of ML experts, current AutoML solutions offer only simplistic and partial solutions that are insufficient to enable non-experts to fully implement new ML projects. Further, although open source software (OSS) databases of existing ML projects (e.g., Kaggle, GitHub, etc.) enable both experts and non-experts to collaborate on existing ML projects, it can be difficult or impossible for a non-expert to find a potentially useful existing ML project in these databases, due at least to conventional key-word searches failing to reliably find the most relevant existing ML projects and failing to find relevant ML projects in domains that are different from the domain of the new ML project.

In the present disclosure, the term "ML project" may refer to a project that includes a dataset, an ML task defined on the dataset, and an ML pipeline (e.g., a script or program code) that is configured to implement a sequence of operations to train a ML model for the ML task and use the ML model for new predictions. In the present disclosure, the term "notebook" may refer to a computational structure used to develop and/or represent ML pipelines (e.g., a Jupyter notebook). In the present disclosure, the terms "structured document" and "structured query" may refer to an electronic document or query whose contents are organized into labeled blocks using a mark-up language such as XML. Although embodiments disclosed herein are illustrated with ML pipelines in the Python programming language, notebooks structured as Jupyter notebooks, and structured documents and structured queries that employ XML, it is understood that other embodiments may include ML pipelines written in different languages, notebooks structured in other platforms, and structured documents and structured queries that employ structured languages other than XML (e.g., JSON, etc.).

According to one or more embodiments of the present disclosure, operations may be performed to automatically recommend an existing ML project as adaptable for use in a new ML project. For example, in some embodiments a computer system may organically support the natural workflow of data-scientists by building on a "search-and-adapt" style work-flow where a data-scientist would first search for existing ML projects that can serve as good starting point for building a new ML project and then suitably adapt the existing ML projects to build an ML pipeline for a new dataset and a new ML task of a new ML project.

For example, in some embodiments a computer system may automatically mine raw ML projects from databases of existing ML projects (e.g., OSS databases of existing ML projects, internal company databases of existing ML projects, etc.) and may automatically curate the raw ML projects prior to storing them in a corpus of existing ML projects. In some embodiments, this mining and curation of existing ML projects from large-scale repositories may result in a corpus of diverse, high-quality existing ML projects that can be used in a search-and-adapt workflow. Also, this curation may involve extracting project features, dataset features, and pipeline features from each existing ML project, and storing these features in the corpus for each existing ML project.

In some embodiments, upon receipt of a new dataset and a new ML task for a new ML project, such as from a non-expert data scientist, the computer system may automatically search the corpus for one or more existing ML projects that may be best suited to be adaptable for use in the new ML project. This searching may include the computer system generating an initial search query based on new project features and new dataset features from the new ML project. The computer system may then perform an initial search on the corpus based on the initial search query to generate an initial ranked set of the existing ML projects that have similar project features and dataset features. Next, the computer system may generate relevant pipeline features based on the pipeline features of the initial ranked set of the existing ML projects and generate a final search query based on the new project features, the new dataset features, and the relevant pipeline features. Then, the computer system may perform a final search on the corpus based on the final search query to generate a final ranked set of the existing ML projects that have similar project features, dataset features, and pipeline features. Finally, the computer system may recommend one or more highest ranked existing ML projects in the final ranked set of the existing ML projects as best adaptable for use in the new ML project.

Therefore, in some embodiments, a non-expert data scientist may merely formulate a new dataset and a new ML task for a new ML project, and the computer system may then implement a tool-assisted, interactive search-and-adapt work flow to automatically search for and recommend an existing ML project as adaptable for use in the new ML project. Thus, some embodiments may empower novice data scientists to efficiently create new high-quality end-to-end ML pipelines for new ML projects.

According to one or more embodiments of the present disclosure, the technological field of ML project development may be improved by configuring a computing system to automatically search for and recommend an existing ML project as adaptable for use in the new ML project, as compared to tasking a data scientist (e.g., who is often a non-expert) to manually find a potentially useful existing ML project most similar to the new requirements of a new ML project. Such a configuration may allow the computing system to better search for relevant existing ML projects based on extracted project features, dataset features, and pipeline features.

Embodiments of the present disclosure are explained with reference to the accompanying drawings.

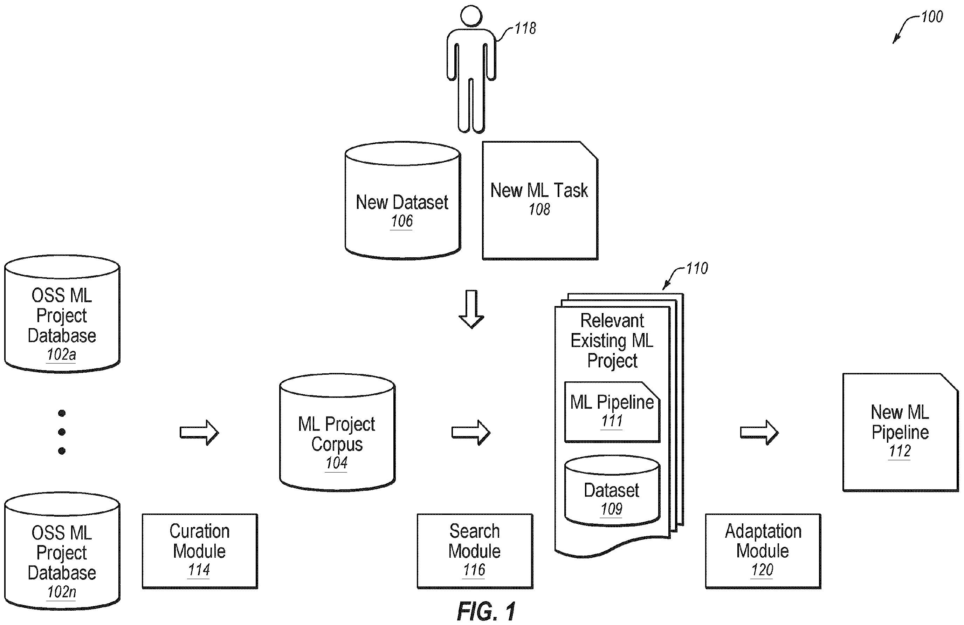

FIG. 1 is a diagram representing an example environment 100 related to automatically searching for and adapting existing ML projects into new ML projects, arranged in accordance with at least one embodiment described in the present disclosure. The environment 100 may include OSS ML project databases 102a-102n, a curation module 114 configured to curate exiting ML projects into an ML project corpus 104, a search module configured to search for relevant existing ML projects 110 (including their corresponding datasets 109 and ML pipelines 111) from the ML project corpus 104 for a new ML project based on a new dataset 106 and a new ML task 108 of the new ML project (e.g., that were provided by a data scientist 118), and an adaptation module 120 configured to synthesize and adapt ML pipelines 111 of relevant existing ML projects 110 into a new ML pipeline 112 of the new ML project.

The OSS ML project databases 102a-102n may be large-scale repositories of existing ML projects, with each ML project including include electronic data that includes at least a dataset, an ML task defined on the dataset, and an ML pipeline (e.g., a script or program code) that is configured to implement a sequence of operations to train an ML model for the ML task and to use the ML model for new predictions. Some examples of large-scale repositories of existing ML projects include, but are not limited to, Kaggle and GitHub. In some embodiments, each ML project in an OSS ML project databases 102a-102n may include a notebook, which may be a computational structure used to develop and/or represent ML pipelines. One example of a notebook is a Jupyter notebook. In some embodiments, the environment 100 may further include other databases of existing ML projects, in addition to the OSS ML project databases 102a-102n, such as internal company databases of existing ML projects, etc.

Each of the curation module 114, the search module 116, and the adaptation module 120 may include code and routines configured to enable a computing device to perform one or more operations. Additionally or alternatively, each of these modules may be implemented using hardware including a processor, a microprocessor (e.g., to perform or control performance of one or more operations), a field-programmable gate array (FPGA), or an application-specific integrated circuit (ASIC). In some other instances, each of the modules may be implemented using a combination of hardware and software. In the present disclosure, operations described as being performed by the each of these modules may include operations that the module may direct a corresponding system to perform.

The curation module 114 may be configured to perform a series of operations with respect to existing ML projects stored in the OSS ML project databases 102a-102n prior to or after storing the existing ML projects in the ML project corpus 104. For example, the curation module 114 may be configured to automatically mine raw ML projects from the OSS ML project databases 102a-102n in order to automatically curate the raw ML projects prior to or after storing them in the ML project corpus 104. The ML project corpus 104 may be a repository of existing ML projects that were curated from the OSS ML project databases 102a-102n. In some embodiments, the ML project corpus 104 may be a large-scale corpus of cleaned, high-quality, indexed existing ML projects that may be employed in an automated "search-and-adapt" style work-flow. In this style of workflow, the searching may involve identifying existing ML project(s) that are relevant to the new ML task 108 and the new dataset 106 and that are to be used as "seeds" to build a new ML project, including the new ML pipeline 112. Further, in this style of workflow, the adapting may involve using an interactive and synthesis approach to adapt the relevant existing ML project(s) 110 to generate the new ML pipeline 112 of the new ML project.

The search module 116 may be configured to perform a series of operations with respect to searching through existing ML projects stored in the ML project corpus 104. For example, the curation module 114 maybe configured to receive the new dataset 106 and the new ML task 108 for a new ML project, such as from the data scientist 118. Then, upon receipt, the search module 116 may be configured to automatically search through the ML project corpus 104 to identify relevant existing ML projects 110.

In some embodiments, the curation module 114 may be configured to mine and curate existing ML projects, and the search module 116 may be configured to search for the relevant existing ML projects 110, in order to overcome various challenges to identifying the relevant existing ML projects 110 for the new ML task 108. For example, for the new ML task 108 of the new ML project, it may be challenging to find the relevant existing ML projects 110 in the ML project corpus 104 based solely on the new ML task 108 and the new dataset 106, such as solely using conventional keyword-based searches, as the search results from conventional searches tend to miss relevant ML projects and also tend to be noisy in that these search results tend to inaccurately include less-relevant ML projects. Also, it can be challenging to identify existing ML projects from other domains that may be very relevant to the new ML task 108 but may seem to be completely irrelevant based solely on matching keywords from a description of the new ML task 108 and the new dataset 106. Therefore, the curation module 114 may be configured to extract and store features from existing ML projects in the ML project corpus 104 to enable the search module 116 to find the relevant existing ML projects 110 in the ML project corpus 104 with respect to the new dataset 106 and the new ML task 108, so that the data scientist 118 can leverage this prior information to quickly implement the new ML task 108. To this end, the search module 116 may be configured to perform a two staged pseudo-relevance feedback based search that can find not only the semantically similar ML projects but also ML projects that are in other domains but nevertheless have ML pipelines that are expected to be very similar to the new ML project.

The adaptation module 120 may be configured to perform a series of operations with respect to synthesizing and adapting the ML pipelines 111 of the relevant existing ML projects 110 into the new ML pipeline 112. For example, the adaptation module 120 maybe configured to automatically select functional blocks from the ML pipelines 111 for use in the new ML pipeline 112 for the new ML project (e.g., which includes the new dataset 106, the new ML task 108, and the new ML pipeline 112). Further, the adaptation module 120 may be configured to adapt the functional blocks of the new ML pipeline 112 to enable the new ML pipeline 112 to be executed to perform the new ML task 108 on the new dataset 106. Although in some embodiments the adaptation module may automatically adapt an existing ML pipeline 111 into the new ML pipeline 112, in other embodiments this automatic adaptation may be replaced or augmented by a recommendation to the data scientist 118 as to which existing ML pipeline(s) 111 would be best suited for manual adaptation into the new ML pipeline 112.

Therefore, in some embodiments, the data scientist 118, who may be a non-expert, may merely formulate the new dataset 106 and the new ML task 108 for a new ML project, and the curation module 114, the search module 116, and the adaptation module 120 may function together (e.g., by performing one or more of the methods disclosed herein) to automatically search for and recommend an existing ML project as adaptable for use in the new ML project. Thus, methods disclosed herein may empower novice data scientists to efficiently create new high-quality end-to-end ML pipelines for new ML projects.

Modifications, additions, or omissions may be made to FIG. 1 without departing from the scope of the present disclosure. For example, the environment 100 may include more or fewer elements than those illustrated and described in the present disclosure.

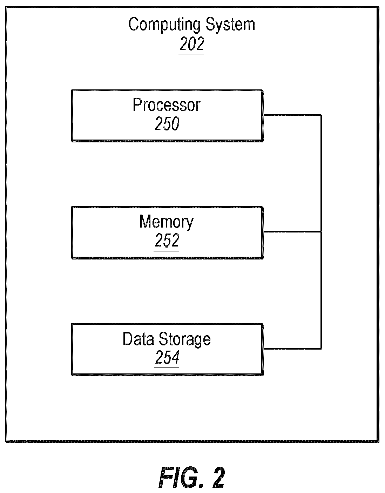

FIG. 2 illustrates a block diagram of an example computing system 202, according to at least one embodiment of the present disclosure. The computing system 202 may be configured to implement or direct one or more operations associated with one or more modules (e.g., the curation module 114, the search module 116, or the adaptation module 120 of FIG. 1, or some combination thereof). The computing system 202 may include a processor 250, a memory 252, and a data storage 254. The processor 250, the memory 252, and the data storage 254 may be communicatively coupled.

In general, the processor 250 may include any suitable special-purpose or general-purpose computer, computing entity, or processing device including various computer hardware or software modules and may be configured to execute instructions stored on any applicable computer-readable storage media. For example, the processor 250 may include a microprocessor, a microcontroller, a digital signal processor (DSP), an application-specific integrated circuit (ASIC), a Field-Programmable Gate Array

(FPGA), or any other digital or analog circuitry configured to interpret and/or to execute program instructions and/or to process data. Although illustrated as a single processor in FIG. 2, the processor 250 may include any number of processors configured to, individually or collectively, perform or direct performance of any number of operations described in the present disclosure. Additionally, one or more of the processors may be present on one or more different electronic devices, such as different servers.

In some embodiments, the processor 250 may be configured to interpret and/or execute program instructions and/or process data stored in the memory 252, the data storage 254, or the memory 252 and the data storage 254. In some embodiments, the processor 250 may fetch program instructions from the data storage 254 and load the program instructions in the memory 252. After the program instructions are loaded into memory 252, the processor 250 may execute the program instructions.

For example, in some embodiments, one or more of the above mentioned modules (e.g., the curation module 114, the search module 116, or the adaptation module 120, or some combination thereof) may be included in the data storage 254 as program instructions. The processor 250 may fetch the program instructions of a corresponding module from the data storage 254 and may load the program instructions of the corresponding module in the memory 252. After the program instructions of the corresponding module are loaded into memory 252, the processor 250 may execute the program instructions such that the computing system may implement the operations associated with the corresponding module as directed by the instructions.

The memory 252 and the data storage 254 may include computer-readable storage media for carrying or having computer-executable instructions or data structures stored thereon. Such computer-readable storage media may include any available media that may be accessed by a general-purpose or special-purpose computer, such as the processor 250. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM)or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 250 to perform a certain operation or group of operations.

Modifications, additions, or omissions may be made to the computing system 202 without departing from the scope of the present disclosure. For example, in some embodiments, the computing system 202 may include any number of other components that may not be explicitly illustrated or described.

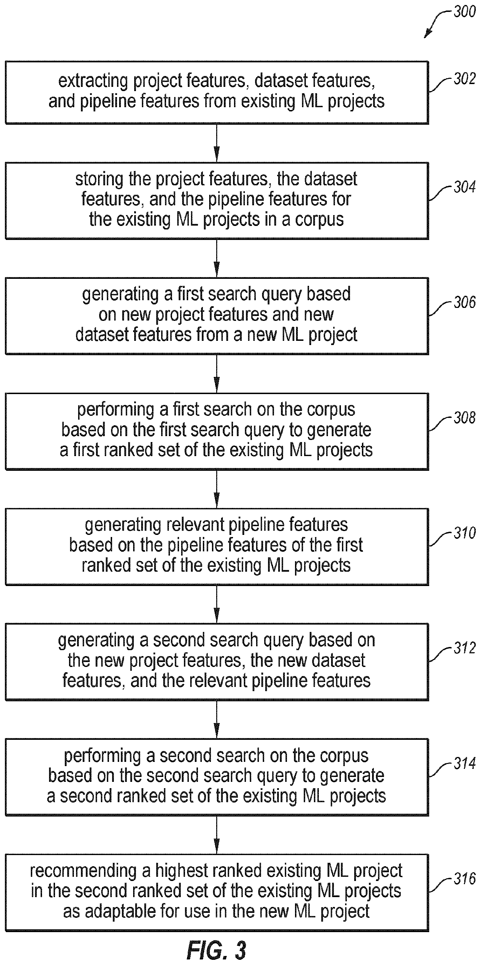

FIG. 3 is a flowchart of an example method 300 of automatically recommending an existing ML project as adaptable for use in a new ML project, according to at least one embodiment described in the present disclosure. The method 300 may be performed by any suitable system, apparatus, or device. For example, the curation module 114 and/or the search module 116 of FIG. 1 or the computing system 202 of FIG. 2 (e.g., as directed by one or more modules) may perform one or more of the operations associated with the method 300. Although illustrated with discrete blocks, the steps and operations associated with one or more of the blocks of the method 300 may be divided into additional blocks, combined into fewer blocks, or eliminated, depending on the particular implementation.

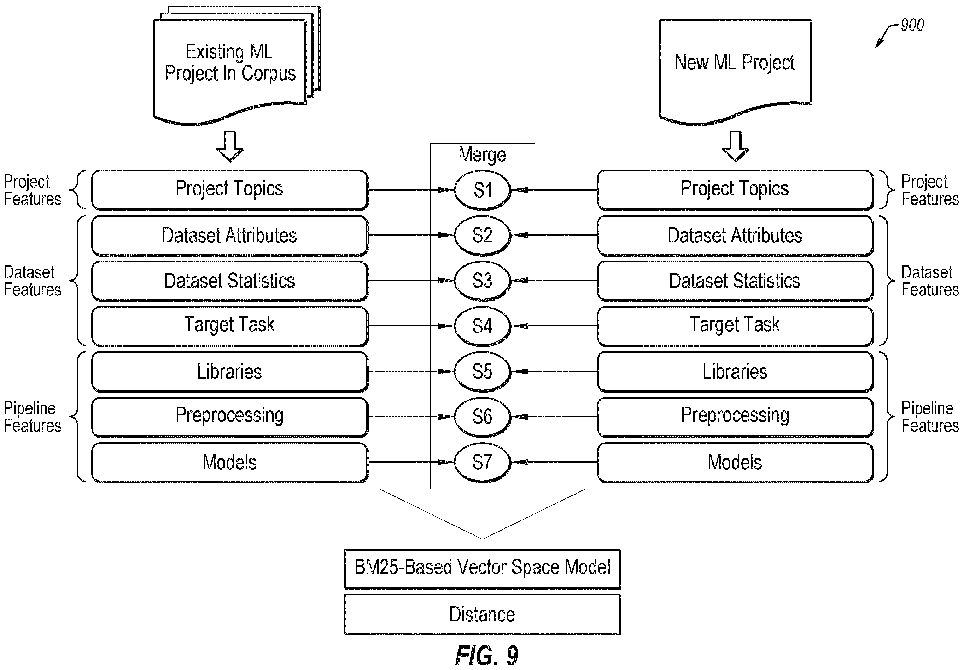

The method 300 may include, at block 302, extracting project features, dataset features, and pipeline features from existing ML projects. In some embodiments, the project features may include one or more project topics features. In some embodiments, the dataset features may include one or more dataset attribute features, one or more dataset statistics features, and one or more target task features. In some embodiments, the pipeline features may include a preprocessing application program interface (API) feature and a model feature. For example, the curation module 114 may crawl the existing ML projects stored in various ML project databases (e.g., the OSS ML project databases 102a-102n, internal company databases of existing ML projects, etc.), and may extract project features, dataset features, and pipeline features from each of the existing ML projects. In some embodiments, these features may include any of the features disclosed in FIG. 9.

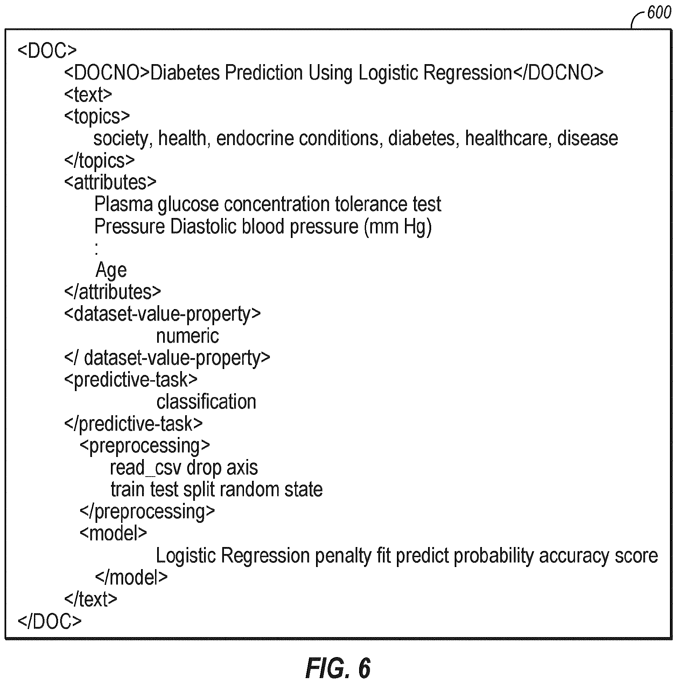

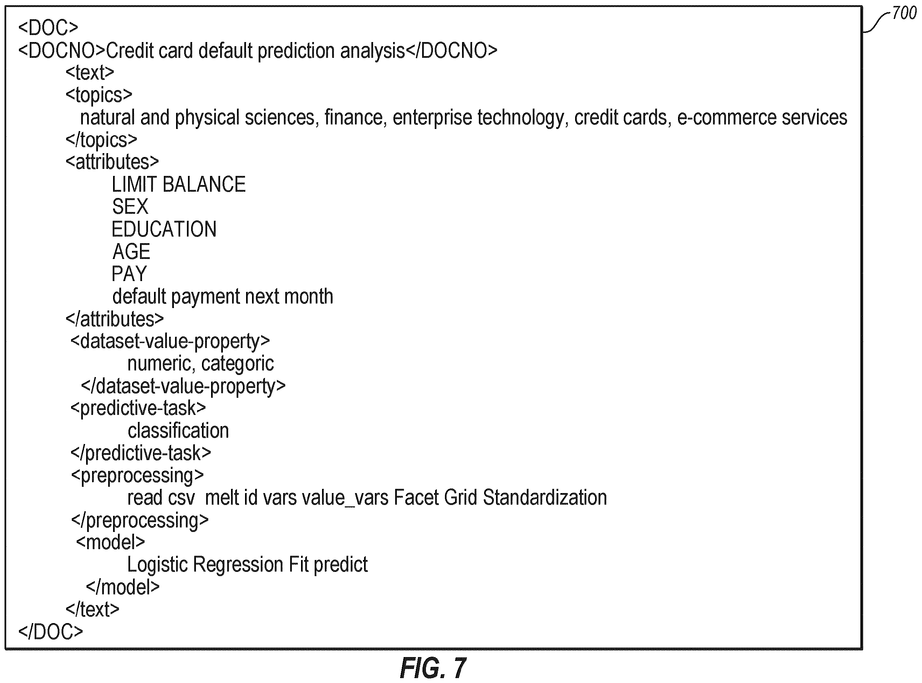

The method 300 may include, at block 304, storing the project features, the dataset features, and the pipeline features for the existing ML projects in a corpus. In some embodiments, prior to the storing, the method 300 may include normalizing the project features, the dataset features, and the pipeline features by performing one or more of removing stopwords, stemming, tokenizing code identifiers, mapping abbreviations to full words, and determining synonyms. In some embodiments, prior to the storing and subsequent to the normalizing, the method 300 may include formatting the normalized project features, the normalized dataset features, and the normalized pipeline features into a structured document. In these embodiments, the method 300 may further include indexing the structured document in the corpus. For example, the curation module 114 may normalize, store, and index the features disclosed in FIG. 9 in the ML project corpus 104 for each of the existing ML projects. These features may be formatted as structured documents, such as the structured documents disclosed in FIG. 6 and 7.

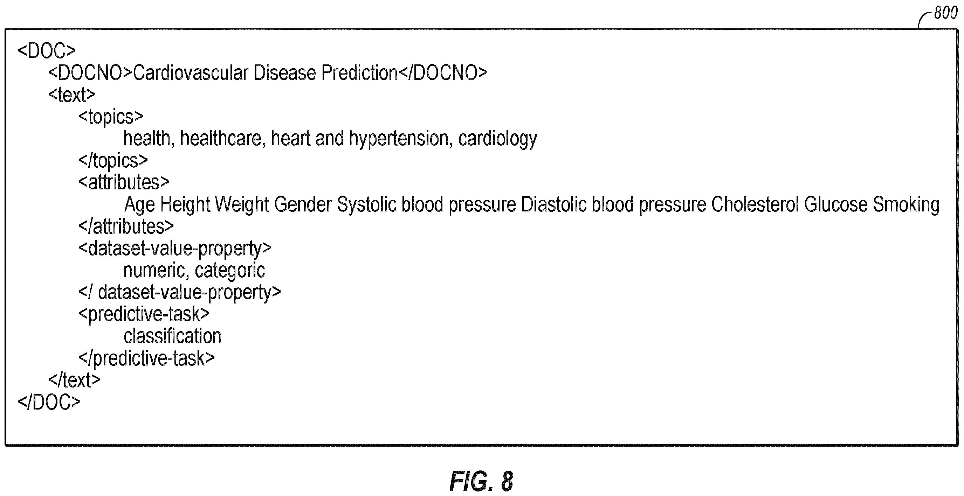

The method 300 may include, at block 306, generating a first search query based on new project features and new dataset features from a new ML project. For example, the search module 116 may generate a first search query based on new project features and new dataset features from a new ML project. In some embodiments, these features may include one or more of the project topics features, dataset attribute features, dataset statistics features, and target task features disclosed in FIG. 9, and may be derived from the new dataset 106 and the new ML task 108. Further, in some embodiments, the first search query may be formatted as a structured query, such as the structured query disclosed in FIG. 8.

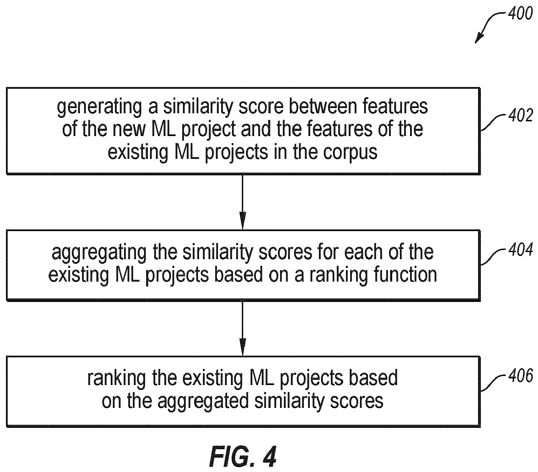

The method 300 may include, at block 308, performing a first search on the corpus based on the first search query to generate a first ranked set of the existing ML projects. For example, the search module 116 may perform a first search on the ML project corpus 104 based on the first search query to generate a first ranked set of the existing ML projects. In some embodiments, the first search may be performed according to one or more operations of the method 400 described in further detail below with respect to FIG. 4.

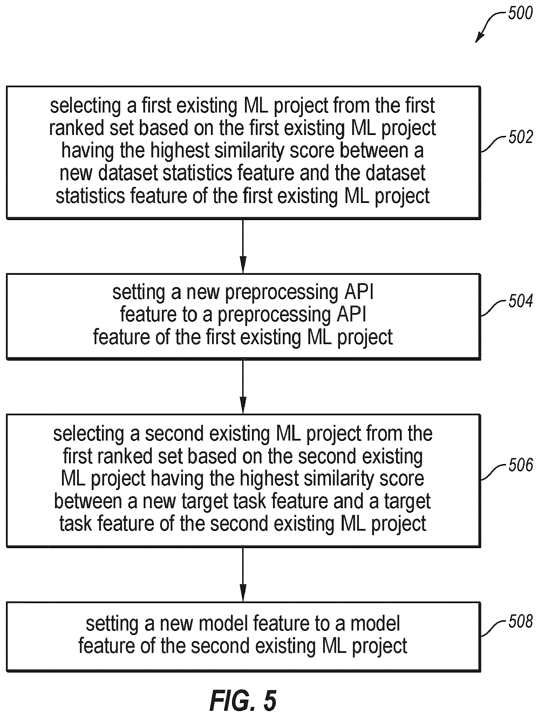

The method 300 may include, at block 310, generating relevant pipeline features based on the pipeline features of the first ranked set of the existing ML projects. For example, the search module 116 may generate relevant pipeline features based on the pipeline features of the first ranked set of the existing ML projects. In some embodiments, the relevant pipeline features may include one or more of the preprocessing API features and the model features disclosed in FIG. 9. In some embodiments, the relevant pipeline features may be generated according to one or more operations of the method 500 described in further detail below with respect to FIG. 5.

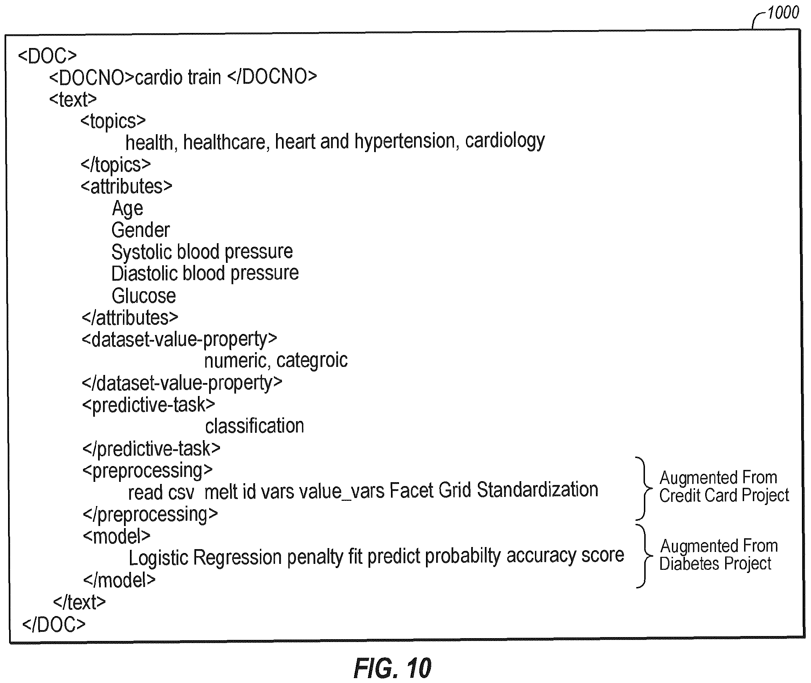

The method 300 may include, at block 312, generating a second search query based on the new project features, the new dataset features, and the relevant pipeline features. For example, the search module 116 may generate a second search query based on the features disclosed in FIG. 9. In some embodiments, the second search query may be formatted as a structured query, and may be a reformulation of the first search query, such as the reformulated structured query 1000 disclosed in FIG. 10, which includes relevant pipeline features (e.g., the API preprocessing features and model features) that were not present in the initial structured query 800 disclosed in FIG. 8.

The method 300 may include, at block 314, performing a second search on the corpus based on the second search query to generate a second ranked set of the existing ML projects. For example, the search module 116 may perform a second search on the ML project corpus 104 based on the second search query to generate the relevant existing ML projects 110 which may be ranked from most relevant to least relevant.

The method 300 may include, at block 316, recommending a highest ranked existing ML project in the second ranked set of the existing ML projects as adaptable for use in the new ML project. For example, the search module 116 may recommend a highest ranked existing ML project of the relevant existing ML projects 110 as being most adaptable for use in the new ML project, which may include adapting the ML pipeline 111 of this existing ML project into the new ML pipeline 112 of the new ML project.

Modifications, additions, or omissions may be made to the method 300 without departing from the scope of the present disclosure. For example some of the operations of method 300 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the disclosed embodiments.

FIG. 4 is a flowchart of an example method 400 of an example method of performing a search on a corpus, according to at least one embodiment described in the present disclosure. In some embodiments, the operations of block 308 described above with respect to the method 300 of FIG. 3 may be performed according to the method 400.

The method 400 may be performed by any suitable system, apparatus, or device. For example, the search module 116 of FIG. 1 or the computing system 202 of FIG. 2 (e.g., as directed by one or more modules) may perform one or more of the operations associated with the method 400. Although illustrated with discrete blocks, the steps and operations associated with one or more of the blocks of the method 400 may be divided into additional blocks, combined into fewer blocks, or eliminated, depending on the particular implementation.

The method 400 may include, at block 402, generating a similarity score between features of the new ML project and the features of the existing ML projects in the corpus. In some embodiments, this generating may include generating a similarity score between the new project features and each of the project features in the corpus, between the one or more new dataset attribute features and each of the dataset attribute features in the corpus, between the one or more new dataset statistics features and each of the dataset statistics features in the corpus, and between the one or more new target task features and each of the target task features in the corpus. For example, the search module 116 may generate similarity scores S1, S2, S3, and S4 (see FIG. 9) between features of the new ML project and the features of the existing ML projects in the ML project corpus 104.

The method 400 may include, at block 404, aggregating the similarity scores for each of the existing ML projects based on a ranking function. For example, the search module 116 may aggregate (e.g., add together) the similarity scores S1, S2, S3, and S4 (see FIG. 9) for each of the existing ML projects based on a ranking function to generate an aggregated (overall) similarity score for each existing ML project.

The method 400 may include, at block 406, ranking the existing ML projects based on the aggregated similarity scores. For example, the search module 116 may rank the existing ML projects based on the aggregated similarity scores.

Modifications, additions, or omissions may be made to the method 400 without departing from the scope of the present disclosure. For example, the operations of method 400 may be implemented in differing order. Further, in some embodiments, the method 400 may be performed iteratively or concurrently with respect to the operations of block 308 of FIG. 3.

FIG. 5 is a flowchart of an example method 500 of generating relevant pipeline features for a new ML project, according to at least one embodiment described in the present disclosure. In some embodiments, the operation of block 310 described above with respect to the method 300 of FIG. 3 may be performed according to the method 500. Further, the method 500 may result in the first search query (that is generated at block 306) being reformulated into the second search query (that is generated at block 312).

The method 500 may be performed by any suitable system, apparatus, or device. For example, the search module 116 of FIG. 1 or the computing system 202 of FIG. 2 (e.g., as directed by one or more modules) may perform one or more of the operations associated with the method 500. Although illustrated with discrete blocks, the steps and operations associated with one or more of the blocks of the method 500 may be divided into additional blocks, combined into fewer blocks, or eliminated, depending on the particular implementation.

The method 500 may include, at block 502, selecting a first existing ML project from the first ranked set based on the first existing ML project having the highest similarity score between a new dataset statistics feature and the dataset statistics feature of the first existing ML project. For example, the search module 116 may select the credit card-related existing ML project (represented by the structured documents 700 of FIG. 7) as having the highest similarity score between a new dataset statistics feature (e.g., represented by the <dataset-value-property> tag in the structured query 800 of FIG. 8) and the dataset statistics feature (e.g., represented by the <dataset-value-property> tag in the structured document 700 of FIG. 7) of the card-related existing ML project.

The method 500 may include, at block 504, setting a new preprocessing API feature to a preprocessing API feature of the first existing ML project. For example, because dataset statistics features tend to correlate with preprocessing API features, the search module 116 may set a new preprocessing API feature (e.g., represented by the <preprocessing> tag in the structured query 1000 of FIG. 10) to a preprocessing API feature (e.g., represented by the <preprocessing> tag in the structured document 700 of FIG. 7) of the card-related existing ML project (represented by the structured document 700 of FIG. 7).

The method 500 may include, at block 506, selecting a second existing ML project from the first ranked set based on the second existing ML project having the highest similarity score between a new target task feature and a target task feature of the second existing ML project. For example, the search module 116 may select the diabetes-related existing ML project (represented by the structured documents 600 of FIG. 6) as having the highest similarity score between a new target task feature (e.g., represented by the <predictive-task> tag in the structured query 800 of FIG. 8) and the target task feature (e.g., represented by the <predictive-task> tag in the structured document 600 of FIG. 6) of the diabetes-related existing ML project.

The method 500 may include, at block 508, setting a new model feature to a model feature of the second existing ML project. For example, because target task features tend to correlate with model features, the search module 116 may set a new model feature (e.g., represented by the <model> tag in the structured query 1000 of FIG. 10) to a model feature (e.g., represented by the <model> tag in the structured document 600 of FIG. 6) of the diabetes-related existing ML project (represented by the structured document 600 of FIG. 6).

Modifications, additions, or omissions may be made to the method 500 without departing from the scope of the present disclosure. For example, the operations of method 500 may be implemented in differing order. Further, in some embodiments, the method 500 may be performed iteratively or concurrently with respect to the operations of block 310 of FIG. 3.

FIG. 6 illustrates a first example structured document 600 of normalized ML project features, and FIG. 7 illustrates a second example structured document 700 of normalized ML project features. The structured documents 600 and 700 may represent features from existing ML projects stored in the ML project corpus 104. For example, the structured document 600 may represent features of a diabetes-related ML project configured to predict whether a patient has diabetes given various characteristics of the patient such as plasma glucose concentration tolerance test results, pressure diastolic blood pressure, age, etc. Further, the structured document 700 may represent features of a credit card-related ML project configured to predict whether an individual will default on a credit card given characteristics such as the limit balance, sex, education, age, pay, and default payment next month. FIGS. 6 and 7 are now discussed to provide an example of how various blocks of the method 300 may be performed with respect to existing ML projects stored in the ML project corpus 104.

In the examples illustrated in FIGS. 6 and 7, the structured documents 600 and 700 represent various features extracted from two separate existing ML projects. In particular, one or more project features may include one or more project topics features represented by the <topics> tags. Further, one or more dataset features may include one or more dataset attribute features represented by the <attributes> tags, one or more dataset statistics features represented by the <dataset-value-property> tags, and one or more target task features represented by the <predictive-task> tags. Also, the pipeline features may include one or more preprocessing API features represented by the <preprocessing> tags and one or more model features represented by the <model> tags.

Modifications, additions, or omissions may be made to the structured documents 600 and 700 without departing from the scope of the present disclosure. For example, various other features and/or other tags may be included in the structured documents 600 and 700, various tags may be removed, and/or various tags may be included in differing orders.

FIG. 8 illustrates an example search query for a new ML project formatted as a structured query 800. The structured query 800 may represent features from a new ML project and may be derived from the new dataset 106 and the new ML task 108 of the new ML project. The structured query 800 may represent features of a new cardiovascular disease-related ML project configured to predict whether a patient has a cardiovascular disease give the age, gender, height, weight, blood pressure, glucose, smoking and alcohol habit, and activity level of the patient. FIG. 8 is now discussed to provide an example of how various blocks of the method 300 may be performed with respect to a new ML project.

In the example illustrated in FIG. 8, the structured query 800 represents various features extracted from a new ML project. In particular, one or more project features may include one or more project topics features represented by the <topics> tag. Further, one or more dataset features may include one or more dataset attribute features represented by the <attributes> tag, one or more dataset statistics features represented by the <dataset-value-property> tag, and one or more target task features represented by the <predictive-task> tag. It is noted that no pipeline features are included in the initial formulation of the structured query 800 because pipeline features may not be derived from the new dataset 106 and the new ML task 108, but may instead be generated (e.g. copied) from existing ML projects.

Modifications, additions, or omissions may be made to the structured query 800 without departing from the scope of the present disclosure. For example, various other features and/or other tags may be included in the structured query 800, various tags may be removed, and/or various tags may be included in differing orders.

FIG. 9 is a flowchart of an example method 900 of computing a similarity score, according to at least one embodiment described in the present disclosure. FIG. 10 illustrates an example reformulated search query for a new ML project formatted as a structured query 1000. FIGS. 9 and 10 are now discussed to provide an example of how various blocks of the method 300 maybe performed with respect to existing ML projects stored in the ML project corpus 104 and a new ML project.

In the examples illustrated in FIG. 9, various features may be extracted from each of the existing ML projects stored in the ML project corpus 104, including project features, dataset features, and pipeline features. Project topics may be derived from an ML task description and/or a notebook and may include important keywords that describes the ML project at a high level as well as at a low level (e.g., for a diabetes dataset, project topics maybe society, health, endocrine conditions, diabetes, healthcare, and disease). Dataset attributes may be derived from an ML task description and/or a dataset and may include descriptions of the dataset columns (e.g., for a diabetes dataset, dataset attributes may include age, insulin, BMI, etc.). Dataset statistics may be derived from a dataset and may include a nature of data in terms of types and distribution (e.g., Min, Max, Median, Numeric or Categoric, etc.). Target task may be derived from an ML task description and/or a notebook and may include a name and nature of the task (e.g., predicting whether a patient has diabetes may be a classification task). Libraries may be derived from an ML pipeline and may include libraries used to implement the ML pipeline of the ML project (e.g., Keras, scikit, pandas, etc.). Preprocessing may be derived from an ML pipeline and may include the APIs used to preprocess the feature (e.g., filling out missing values, scaling, applying various transformations). The model may be derived from an ML pipeline and may include the supervised learning technique used to solve the predictive task and all the APIs used to implement the ML model (e.g., Logistic regression, Random Forest, Neural Network, etc.).

Similarly, various features may be extracted from new dataset 106 and the new ML task 108 of the new ML project, including project features and dataset features, but not including pipeline features since these may not be extractable from the new dataset 106 and the new ML task 108. Instead, the pipeline features of the new ML project may be generated (e.g., copied) from the pipeline features of one or more of the existing ML projects.

For example, during the first search performed in block 308 of the method 300 of FIG. 3, the similarity scores S1, S2, S3, and S4 may be calculated and aggregated (e.g., by comparing features in the structured query 800 to features in the structured documents 600 and 700 and all other structured documents of all other existing ML projects stored in the ML project corpus 104). This calculation and aggregation may determine a first ranked set of existing ML projects from the ML project corpus 104 with project features and dataset features that are most similar to the project features and dataset features of the new ML project. In some embodiments, the similarity scores may be individually weighted so that certain similarity scores are weighted higher than other similarity scores to reflect a higher priority for certain features and a lower priority for other features.

Then, during block 310 of the method 300 of FIG. 3, the pipeline features for the new ML project may be derived from this first ranked set of existing ML projects. For example, because dataset statistics features tend to correlate with preprocessing API features, the preprocessing API feature of the new ML project may be derived from the preprocessing API feature of the existing ML project in the first ranked set of existing ML projects having the highest similarity score S3 for dataset statistics features (e.g., the structured query 800 may be augmented with the <preprocess> tag from the structured document 700, as disclosed in the structured query 1000). Similarly, because target task features tend to correlate with model features, the model features of the new ML project may be derived from the model features of the existing ML project in the first ranked set of existing ML projects having the highest similarity score S4 for target task features (e.g., the structured query 800 may be augmented with the <model> tag from the structured document 600, as disclosed in the structured query 1000). Thus, the structured query 800 may be reformulated through pseudo-relevance feedback resulting in the reformulated structured query 1000.

Next, during the second search performed in block 314 of the method 300 of FIG. 3, the similarity scores S1, S2, S3, S4, S5, S6, and S7 maybe calculated and aggregated (e.g., by comparing features of the reformulated structured query 1000 to features of the structured documents 600 and 700 and all other structured documents of all other existing ML projects stored in the ML project corpus). This calculation and aggregation may determine a second ranked set of existing ML projects from the ML project corpus 104 (e.g., the relevant existing ML projects 110) with project features, dataset features, and pipeline features that are most similar to the project features, dataset features, and pipeline features of the new ML project. In some embodiments, the similarity scores of the method 900 may be calculated in a variety of ways. For example, the similarity scores S1, S2, S6, and S7 may be particularly suited to be calculated using a BM25-based vector space model. Also, the similarity scores S3, S4, and S5 may be particularly suited to be calculated using a distance calculation.

Finally, at block 316 of the method 300 of FIG. 3, one or more highest-ranked existing ML projects in the relevant existing ML projects 110 may be recommended as being best adaptable for use in the new ML project, including in the automatic or manual adaptation into the new ML pipeline 112 of the new ML project.

Modifications, additions, or omissions may be made to the method 900 or the structured query 1000 without departing from the scope of the present disclosure. For example some of the operations of method 900 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the disclosed embodiments. Further, various other features and/or other tags may be included in the structured query 1000, various tags may be removed, and/or various tags may be included in differing orders.

As indicated above, the embodiments described in the present disclosure may include the use of a special purpose or general purpose computer including various computer hardware or software modules, as discussed in greater detail below. Further, as indicated above, embodiments described in the present disclosure may be implemented using computer-readable media for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. This interpretation of the phrase "A or B" is still applicable even though the term "A and/or B" may be used at times to include the possibilities of "A" or "B" or "A and B."

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method comprising:
for each existing machine learning (ML) project in a set of existing ML projects, extracting first project features, first dataset features, and first pipeline features from the existing ML project, and storing the first project features, the first dataset features, and the first pipeline features for the existing ML project in a corpus;
generating a first search query based on second project features and second dataset features from a second ML project;
performing a first search on the corpus based on the first search query to generate a first ranked set of the existing ML projects based on one or more first similarity scores;
generating second pipeline features based on the first pipeline features of the first ranked set of the existing ML projects;
generating a second search query based on the second project features, the second dataset features, and the second pipeline features;
performing a second search on the corpus based on the second search query to generate a second ranked set of the existing ML projects based on one or more second similarity scores; and
recommending a highest ranked existing ML project in the second ranked set of the existing ML projects as adaptable for use in the second ML project.

2. The method of claim 1, further comprising, prior to the storing, normalizing the first project features, the first dataset features, and the first pipeline features by performing one or more of removing stopwords, stemming, tokenizing code identifiers, mapping abbreviations to full words, and determining synonyms.

3. The method of claim 2, further comprising, prior to the storing and subsequent to the normalizing, formatting the normalized first project features, the normalized first dataset features, and the normalized first pipeline features into a structured document.

4. The method of claim 3, wherein the storing further comprises indexing the structured document in the corpus.

5. The method of claim 1, wherein:
the first dataset features of the existing ML projects comprise one or more first dataset attribute features, one or more first dataset statistics features, and one or more first target task features; and
the second dataset features of the second ML project comprise one or more second dataset attribute features, one or more second dataset statistics features, and one or more second target task features.

6. The method of claim 5, wherein the performing of the first search on the corpus comprises:
generating an intermediate similarity score for each of the existing ML projects between the second project features and each of the first project features in the corpus, between the one or more second dataset attribute features and each of the first dataset attribute features in the corpus, between the one or more second dataset statistics features and each of the first dataset statistics features in the corpus, and between the one or more second target task features and each of the first target task features in the corpus;
aggregating the intermediate similarity scores for each of the existing ML projects into one of the one or more first similarity scores based on a ranking function; and
ranking the existing ML projects based on the one or more first similarity scores.

7. The method of claim 6, wherein:
the first pipeline features of each of the existing ML projects comprise a first preprocessing application program interface (API) feature and a first model feature; and
the second pipeline features of the second ML project comprise a second preprocessing API feature and a second model feature.

8. The method of claim 7, wherein the generating of the second pipeline features for the second ML project comprises:
selecting a first existing ML project from the first ranked set based on the first existing ML project having the highest first similarity score between the one or more second dataset statistics features and the one or more first dataset statistics features of the first existing ML project;
setting the one or more second preprocessing API features to the one or more first preprocessing API features of the first existing ML project;
selecting a second existing ML project from the first ranked set based on the second existing ML project having the highest first similarity score between the one or more second target task features and the one or more first target task features of the second existing ML project; and
setting the one or more second model features to the first model feature of the second existing ML project.

9. One or more non-transitory computer-readable storage media configured to store instructions that, in response to being executed, cause a system to perform operations, the operations comprising:
for each existing machine learning (ML) project in a set of existing ML projects, extracting first project features, first dataset features, and first pipeline features from the existing ML project, and storing the first project features, the first dataset features, and the first pipeline features for the existing ML project in a corpus;
generating a first search query based on second project features and second dataset features from a second ML project;
performing a first search on the corpus based on the first search query to generate a first ranked set of the existing ML projects based on one or more first similarity scores;
generating second pipeline features based on the first pipeline features of the first ranked set of the existing ML projects;
generating a second search query based on the second project features, the second dataset features, and the second pipeline features;
performing a second search on the corpus based on the second search query to generate a second ranked set of the existing ML projects based on one or more second similarity scores; and
recommending a highest ranked existing ML project in the second ranked set of the existing ML projects as adaptable for use in the second ML project.

10. The one or more non-transitory computer-readable storage media of claim 9, wherein the operations further comprise, prior to the storing, normalizing the first project features, the first dataset features, and the first pipeline features by performing one or more of removing stopwords, stemming, tokenizing code identifiers, mapping abbreviations to full words, and determining synonyms.

11. The one or more non-transitory computer-readable storage media of claim 10, wherein the operations further comprise, prior to the storing and subsequent to the normalizing, formatting the normalized first project features, the normalized first dataset features, and the normalized first pipeline features into a structured document.

12. The one or more non-transitory computer-readable storage media of claim 11, wherein the storing further comprises indexing the structured document in the corpus.

13. The one or more non-transitory computer-readable storage media of claim 9, wherein:
the first dataset features of the existing ML projects comprise one or more first dataset attribute features, one or more first dataset statistics features, and one or more first target task features; and
the second dataset features of the second ML project comprise one or more second dataset attribute features, one or more second dataset statistics features, and one or more second target task features.

14. The one or more non-transitory computer-readable storage media of claim 13, wherein the performing of the first search on the corpus comprises:
generating an intermediate similarity score for each of the existing ML projects between the second project features and each of the first project features in the corpus, between the one or more second dataset attribute features and each of the first dataset attribute features in the corpus, between the one or more second dataset statistics features and each of the first dataset statistics features in the corpus, and between the one or more second target task features and each of the first target task features in the corpus;
aggregating the intermediate similarity scores for each of the existing ML projects into one of the one or more first similarity scores based on a ranking function; and
ranking the existing ML projects based on the one or more first similarity scores.

15. The one or more non-transitory computer-readable storage media of claim 14, wherein:
the first pipeline features of each of the existing ML projects comprise a first preprocessing application program interface (API) feature and a first model feature; and
the second pipeline features of the second ML project comprise a second preprocessing API feature and a second model feature.

16. The one or more non-transitory computer-readable storage media of claim 15, wherein
the generating of the second pipeline features for the second ML project comprises:
selecting a first existing ML project from the first ranked set based on the first existing ML project having the highest first similarity score between the one or more second dataset statistics features and the one or more first dataset statistics features of the first existing ML project;
setting the one or more second preprocessing API features to the one or more first preprocessing API features of the first existing ML project;
selecting a second existing ML project from the first ranked set based on the second existing ML project having the highest first similarity score between the one or more second target task features and the one or more first target task features of the second existing ML project; and
setting the one or more second model features to the first model feature of the second existing ML project.

17. A system comprising:
one or more processors; and
one or more non-transitory computer-readable storage media configured to store instructions that, in response to being executed by the one or more processors, cause the system to perform operations, the operations comprising:
for each existing machine learning (ML) project in a set of existing ML projects, extracting first project features, first dataset features, and first pipeline features from the existing ML project, and storing the first project features, the first dataset features, and the first pipeline features for the existing ML project in a corpus;
generating a first search query based on second project features and second dataset features from a second ML project;
performing a first search on the corpus based on the first search query to generate a first ranked set of the existing ML projects based on one or more first similarity scores;
generating second pipeline features based on the first pipeline features of the first ranked set of the existing ML projects;
generating a second search query based on the second project features, the second dataset features, and the second pipeline features;
performing a second search on the corpus based on the second search query to generate a second ranked set of the existing ML projects based on one or more second similarity scores; and
recommending a highest ranked existing ML project in the second ranked set of the existing ML projects as adaptable for use in the second ML project.

18. The system of claim 17, wherein the operations further comprise:
prior to the storing, normalizing the first project features, the first dataset features, and the first pipeline features by performing one or more of removing stopwords, stemming, tokenizing code identifiers, mapping abbreviations to full words, and determining synonyms; and
prior to the storing and subsequent to the normalizing, formatting the normalized first project features, the normalized first dataset features, and the normalized first pipeline features into a structured document.

19. The system of claim 18, wherein the storing further comprises indexing the structured document in the corpus.

20. The system of claim 17, wherein:
the first dataset features of the existing ML projects comprise one or more first dataset attribute features, one or more first dataset statistics features, and one or more first target task features;
the second dataset features of the second ML project comprise one or more second dataset attribute features, one or more second dataset statistics features, and one or more second target task features;
the performing of the first search on the corpus comprises:
generating an intermediate similarity score for each of the existing ML projects between the second project features and each of the first project features in the corpus, between the one or more second dataset attribute features and each of the first dataset attribute features in the corpus, between the one or more second dataset statistics features and each of the first dataset statistics features in the corpus, and between the one or more second target task features and each of the first target task features in the corpus;
aggregating the intermediate similarity scores for each of the existing ML projects into one of the one or more first similarity scores based on a ranking function; and
ranking the existing ML projects based on the one or more first similarity scores;
the first pipeline features of each of the existing ML projects comprise a first preprocessing application program interface (API) feature and a first model feature;
the second pipeline features of the second ML project comprise a second preprocessing API feature and a second model feature; and
the generating of the second pipeline features for the second ML project comprises:
selecting a first existing ML project from the first ranked set based on the first existing ML project having the highest first similarity score between the one or more second dataset statistics features and the one or more first dataset statistics features of the first existing ML project;
setting the one or more second preprocessing API features to the one or more first preprocessing API features of the first existing ML project;
selecting a second existing ML project from the first ranked set based on the second existing ML project having the highest first similarity score between the one or more second target task features and the one or more first target task features of the second existing ML project; and
setting the one or more second model features to the first model feature of the second existing ML project.
